Europäisches Patentamt

European Patent Office

Office européen des brevets

(11) Publication number: **0 037 871**
**B1**

# EUROPEAN PATENT SPECIFICATION

(45) Date of publication of patent specification: **09.11.83**

(51) Int. Cl.³: **A 01 D 53/06**

(21) Application number: **80850053.2**

(22) Date of filing: **15.04.80**

(54) Collecting accessory for air supported lawn mower.

(43) Date of publication of application:
**21.10.81 Bulletin 81/42**

(45) Publication of the grant of the patent:
**09.11.83 Bulletin 83/45**

(84) Designated Contracting States:
**AT BE CH DE FR GB IT LI NL SE**

(56) References cited:
**BE - A - 654 297**
**DE - A - 1 482 002**
**FR - A - 2 419 666**
**FR - E - 95 195**
**GB - A - 1 448 539**
**US - A - 3 838 558**
**US - A - 4 087 955**
**US - A - 4 107 906**

(73) Proprietor: **FLYMO LIMITED**
**Aycliffe Industrial Estate**
**Darlington, Co. Durham DL5 6HD (GB)**

(72) Inventor: **Almond, David Richard**
**190 JB Dekeyser Straat**
**1970 Wezenbeek-Oppem Brussels (BE)**
Inventor: **Baggett, David**
**Toft Gate Farm, Burnopfield**
**Newcastle-upon-Tyne NE16 6AG (GB)**
Inventor: **Turner, Colin**
**59 Barley Mill Road, Bridgehill**
**Consett Co. Durham DH8 8JS (GB)**

(74) Representative: **Hagelbäck, Evert Isidor et al,**
**c/o AB Electrolux Patentavdelningen**
**S-105 45 Stockholm (SE)**

Courier Press, Leamington Spa, England.

Collecting accessory for air supported lawn mower

This invention relates to a lawn mower of the type which in operation is supported by a cushion of air and has a knife rotatable about a vertical axis and a fan wheel rotatable about the same axis, the fan wheel and the knife being shrouded by a hood, the mower having a rim around the hood and the hood having one or more than one opening for air to the air cushion.

It is previously known when using mowers of the above type to collect the grass during cutting. This is illustrated in British patent application No. 2,017,475 and is achieved because the air stream building up the air cushion is also used to transport the cut grass, which is transferred to a separate bag attached to the rear of the mower. In order to obtain good function it is necessary to shape the underside of the hood as well as the transportation channel appropriately.

The lawn mower according to this invention is an alternative to the device described above and can be used without any major constructional changes of a conventional air cushion mower still giving an excellent collecting result. According to the invention at least a part of the air stream to the fan wheel before reaching the fan wheel is used to pick up and transport grass, leaves and the like from the ground to a collecting chamber in the mower, the mower or collecting chamber having means for separating grass from air.

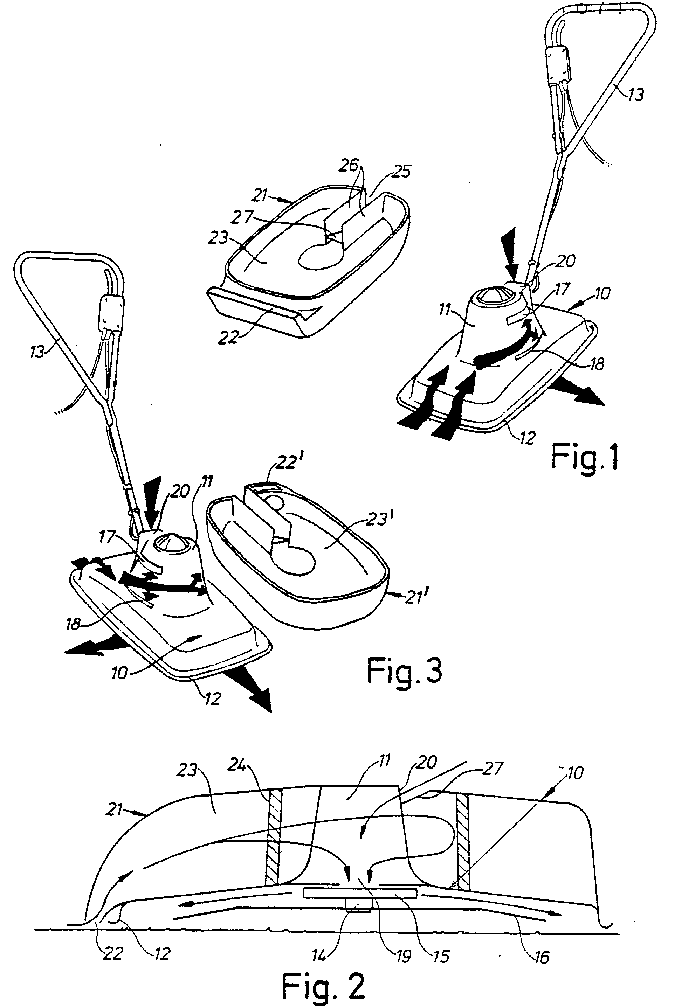

Two embodiments of the invention will now be described with reference to the drawings. Fig. 1 is a perspective view showing a conventional air cushion mower which can be provided with a cover, shown lifted up and turned upside down, in order to create the air stream shown by large arrows in the Figure. Fig. 2 shows in a vertical section the same mower provided with cover. Fig. 3 shows another embodiment of the invention in the same view as Fig. 1.

As appears from Figs. 1 and 2 the mower comprises a hood 10 which supports a housing 11 for an electric motor (not shown). The hood has a rim 12, which extends around the periphery of the mower, and a handle 13, which has a switch for the electric motor. The motor has a vertical shaft 14, on which a fan wheel 15 and a knife 16 are mounted. The fan wheel 15 creates an air cushion under the hood 10 by drawing air from the upper side of the hood 10 and distributing it to the underside thereof. This air stream is taken in through first slots 17 in the housing 11 and through second slots 18 between the housing 11 and the hood 10 and is led to the fan wheel 15 through one or more than one opening 19 in the centre of the hood 10. Cooling air to the motor is simultaneously sucked into a separate inlet 20 in the upper part of the housing 11 by the fan wheel 15, and this air stream passes over the motor before it is delivered to the air cushion.

Thus, the above device is a conventional air cushion mower. By providing such a mower with a cover 21 of particular shape, the air being sucked into the fan wheel can be used to take up cut grass, leaves and the like from a lawn and to transport it to a space within the cover. This is achieved by an air stream as illustrated by the arrows in Fig. 1. In order to provide such an air stream the cover has a nozzle opening 22, which when the cover is fastened to the hood 10 is adjacent the rim 12 of the hood 10. This nozzle opening 22 extends over the complete width of the front part of the mower. The cover 21 together with the hood 10 forms a chamber 23 to which grass and leaves are transmitted. To collect grass and leaves in the chamber 23 and prevent them from entering the air cushion the chamber 23 is provided with a filter 24. Air from the chamber 23 is supplied to the air cushion via the fan wheel 15. In order not to hinder vertical movement of the handle 13 there is a recess 25 in the rear part of the cover.

This recess 25 is limited by side walls 26 and an upper wall 27, which is shaped so that cooling air to the motor is taken in the normal way directly from the atmosphere. The chamber 23 is emptied by loosening the cover 21 from the hood 10, to which it is fastened by suitable means.

Fig. 3 illustrates an embodiment in which the cover 21' has a nozzle opening 22' which is disposed at a concentrated area in the rear part of the mower, thereby creating the air stream which is shown by the arrows in the Figure. The object of this arrangement is to pick up cut grass, which normally forms a window behind the mower at one of its sides, since the cut grass, depending on the direction of rotation of the knife is thrown against one of the inner side walls of the hood 10. By disposing the nozzle opening 22' above the area where the window normally is formed the grass is sucked into the chamber 23' to which it is delivered before the air stream continues into the air cushion via the fan wheel 15.

It is of course possible to place the nozzle opening 22' at any suitable place around the mower and to combine the above nozzle openings 22' in one and the same cover 21 by providing the cover 21 with means making it possible to block one nozzle opening 22' when the other is open or to have both nozzle openings 22' open simultaneously.

## Claims

1. Lawn mower of the type which in operation is supported by a cushion of air and has a knife (16) rotatable about a vertical axis and a fan wheel (15) rotatable about the same axis, the fan wheel and the knife being shrouded by a hood (10), the mower having a rim (12) around the hood and the hood having one or more than one opening (19) for air to the air cushion, characterized in that at least a part of the air stream to the fan wheel (15) before reaching the fan wheel is used to pick up and transport grass, leaves and the like from the ground to a collecting chamber (23) in the mower, the collecting chamber (23) having means (24) for separating grass from air.

2. Lawn mower according to Claim 1, characterized in that the or each opening (19) in the hood communicates with one or more than one nozzle opening (22), the or each nozzle opening (22) being situated near the rim (12).

3. Lawn mower according to Claim 2, characterized in that the nozzle opening (22) extends over the width of the front part of the mower.

4. Lawn mower according to Claim 2, characterized in that the nozzle opening (22) is disposed at the rear part of the hood (10) near one of its side walls.

5. Lawn mower according to any of Claims 2—4 characterized in that the means of communication between the or each nozzle opening (22) and the or each opening (19) in the hood forms the collecting chamber (23).

6. Lawn mower according to any of Claims 1—5, characterized in that the separating means (24) consist of a filter.

7. Lawn mower according to Claim 6, characterized in that the collecting chamber (23) is a cover (21) which is provided with means (27) by which a separate cooling air stream can be directed to the motor.

## Revendications

1. Tondeuse à gazon du type qui, en fonctionnement, est supportée par un coussin d'air et comporte un couteau (16) monté à rotation autour d'un axe vertical et une roue de ventilateur (15) montée à rotation autour du même axe, la roue de ventilateur et le couteau étant entourés par un capot (10), la tondeuse comportant un rebord (12) s'étendant autour du capot et le capot comportant une ou plusieurs ouvertures (19) pour alimenter en air le coussin d'air, caractérisée en ce qu'au moins une partie du courant d'air vers la roue de ventilateur (15), pour ramasser l'herbe, les feuilles et analogues sur le sol et les transporter jusqu'à une chambre collectrice (23) prévue dans la tondeuse, la chambre collectrice (23) comprenant des moyens (24) pour séparer l'herbe de l'air.

2. Tondeuse à gazon selon la revendication 1, caractérisée en ce que l'ouverture ou chaque ouverture (19) du capot communique avec une ou plusieurs ouvertures (22) de buse, l'ouverture de buse ou chaque ouverture (22) de buse étant située au voisinage du rebord (12).

3. Tondeuse à gazon selon la revendication 2, caractérisée en ce que l'ouverture (22) de buse s'étend sur toute la largeur de la partie avant de la tondeuse.

4. Tondeuse à gazon selon la revendication 2, caractérisée en ce que l'ouverture (22) de buse est disposée à la partie arrière du capot (10) au voisinage d'une de ses parois latérales.

5. Tondeuse à gazon selon l'une des revendications 2 à 4, caractérisée en ce que les moyens de communication entre l'ouverture de buse ou chaque ouverture (22) de buse et l'ouverture ou chaque ouverture (19) du capot forment la chambre collectrice (23).

6. Tondeuse à gazon selon l'une des revendications 1 à 5, caractérisée en ce que les moyens (24) de séparation sont constitués par un filtre.

7. Tondeuse à gazon selon la revendication 6, caractérisée en ce que la chambre collectrice (23) est un couvercle (21) qui est muni de moyens (27) à l'aide desquels un courant d'air de refroidissement séparé peut être envoyé au moteur.

## Patentansprüche

1. Rasenmäher vom Typ, der im Betrieb von einem Luftkissen getragen wird und ein um eine vertikale Achse drehbares Messer (16) sowie ein um die gleiche Achse drehbares Flügelrad (15) hat, wobei das Flügelrad und das Messer von einer Haube (10) ummantelt sind, der Rasenmäher um die Haube herum einen Rand (12) hat und die Haube eine Öffnung oder mehr als eine Öffnung (19) für Luft zum Luftkissen hat, dadurch gekennzeichnet, dass mindestens ein Teil des zum Flügelrad (15) geleiteten Luftstroms vor Erreichen des Flügelrads dazu benutzt wird, Gras, Blätter und dergleichen aufzunehmen und vom Boden in eine im Rasenmäher befindliche Sammelkammer (23) zu fördern, wobei dei Sammelkammer (23) Mittel (24) zur Trennung des Grases von der Luft hat.

2. Rasenmäher nach Anspruch 1, dadurch gekennzeichnet, dass die oder jede Öffnung (19) in der Haube in Verbindung mit einer oder mehr als einer Düsenöffnung (22) steht, wobei die oder jede Düsenöffnung (22) in der Nähe des Rands (12) liegt.

3. Rasenmäher nach Anspruch 2, dadurch gekennzeichnet, dass sich die Düsenöffnung (22) über die Breite des vorderen Teils des Rasenmähers erstreckt.

4. Rasenmäher nach anspruch 2, dadurch gekennzeichnet, dass die Düsenöffnung (22) im hinteren Teil der Haube (10) in der Nähe einer ihrer Seitenwände angeordnet ist.

5. Rasenmäher nach einem der Ansprüche 2 bis 4, dadurch gekennzeichnet, dass die Verbindungsmittel zwischen der oder jeder Düsenöffnung (22) und der oder jeder Öffnung (19) in der Haube die Sammelkammer (23) bilden.

6. Rasenmäher nach einem der Ansprüche 1 bis 5, dadurch gekennzeichnet, dass die Trennmittel (24) aus einem Filter bestehen.

7. Rasenmäher nach Anspruch 6, dadurch

5 0 037 871 6

gekennzeichnet, dass die Sammelkammer (23) eine Abdeckung (21) ist, die mit Mitteln (27) versehen ist, mit welchen ein getrennter Kühlluftstrom zum Motor leitbar ist.

0 037 871

Fig.1

Fig.3

Fig. 2

1